# EUROPEAN PATENT SPECIFICATION

(11) **EP 2 681 357 B1**
(45) Date of publication and mention of the grant of the patent: **31.03.2021**
(21) Application number: 12752687.9
(22) Date of filing: 16.02.2012
(51) Int. Cl.: D06F 39/00, D06F 33/00, D06F 34/28

(54) **CONTROL PANEL AND LAUNDRY MACHINE HAVING THE SAME, FURTHER METHOD FOR CONTROLLING THE SAME**
BEDIENFELD UND WASCHMASCHINE DAMIT SOWIE STEUERVERFAHREN DAFÜR
TABLEAU DE COMMANDE ET LAVE-LINGE POSSÉDANT CELUI-CI, PROCÉDÉ SUPPLÉMENTAIRE DE COMMANDE DE CELUI-CI

(30) Priority: 03.03.2011 KR 20110018905
(43) Date of publication of application: 08.01.2014
(73) Proprietor: LG Electronics Inc., Seoul 150-721 (KR)
(72) Inventor: LEE, Junghwan, Seoul 137-130 (KR); SON, Nerry, Seoul 137-130 (KR); UM, Yeji, Seoul 137-130 (KR); JEON, Hoil, Seoul 137-130 (KR)
(74) Representative: Vossius & Partner Patentanwälte Rechtsanwälte mbB
(86) International application number: PCT/KR2012/001161
(87) International publication number: WO 2012/118285

(56) References cited:
- EP-A1- 1 354 999
- EP-A1- 1 959 044
- EP-A2- 1 186 694
- WO-A1-2004/109005
- DE-A1- 19 810 907
- KR-A- 20020 047 632
- US-A1- 2002 078 511
- US-A1- 2003 028 259
- US-A1- 2004 134 238

## Description

### Technical Field

Embodiments of the invention relate to a control panel for a laundry machine, a further method for controlling the same, more particularly, to a control panel which enables effective washing by reflecting variety of laundry information and a laundry machine including the same, further a control method for controlling the same.

### Background Art

Commonly, a laundry machine refers to a washing machine for washing laundry by using wash water and a dryer for drying drying-objects by using dry air. In this instance, a single washing machine can perform a washing function or a drying function or both of the washing and drying functions.

In the past, there was performed only a uniformly standardized washing course, regardless of a type of a washing (or drying) object or fitted to one type. For example, a laundry machine is developed that includes a washing course corresponding to each single type of laundry, when laundry items are normal washing items, jeans or lingerie.

Typically, a user operates a laundry machine for various types of laundry such as lingerie, jeans and socks at a time. However, the laundry machine has only several washing courses partially reflecting characteristics of each laundry type such as a standard course or a bedding course that is specified for a single washing item.

Although washing conditions such as the temperature of washing water, the frequency of rinsing cycles and the speed of a spinning cycle have to be differential based on each type of laundry, a conventional laundry machine allows the user to select only a standard course proper to normal laundry items or a washing course specified for a single laundry type. Especially, the washing courses provided in the conventional laundry machine to be selectable by the user are limited to only a single type of laundry items. If several types of the laundry are washed together, the conventional laundry machine has a disadvantage of failure in performing optimal washing.

US 2003/028259 A1 relates to a household appliance being provided with a visual display as well as a control system which enables the visual display to be used in an advertising mode of operation.

WO 2004/109005 A1 relates to a washing machine comprising a display wherein the display is provided with several LED buttons arranged with respective labels.

US 2004/134238 A1 relates to a control interface for a laundry appliance comprising a microcomputer and a reconfigurable display coupled to the microcomputer.

### Disclosure of Invention

### Technical Problem

To solve the problems, an object of the embodiments is to provide a laundry machine which enables effective washing by reflecting information about a plurality of laundry types.

### Solution to Problem

The object of the invention is solved with the features of the independent claims. Dependent claims refer to preferred embodiments.

To achieve the object, a control panel for a laundry machine comprising the control panel is provided, said control panel comprising: a screen to display information on laundry and at least one input value of washing information; an information input unit to input a plurality of types of laundry by a user; and a control unit to determine the at least one input value of the washing information based on information inputted to said input unit.

At least one of the amount of the laundry, a color of the laundry and a soil level of the laundry is additionally inputted to said information input unit, and the control unit is configured to determine if it is inappropriate to perform a washing course according to the inputted type of the laundry or the inputted color of the laundry.

The screen may be a touch screen and the information input unit may be provided on the screen.

The information input unit may include a laundry type displaying region to display the plurality of the laundry types.

A type of the laundry may be touched on the laundry type displaying region and the touched type may be dragged to a specific point on the screen to select the type of the laundry.

The information input unit may include a soil level inputting region to input a soil level of the laundry.

The soil level of the laundry may be inputted by touching a first point on the soil level inputting region and dragging the touched point to a second point.

The soil level in proportion to the touch time of the soil level inputting region may be inputted.

The amount of the laundry may be inputted to the information input unit, in proportion to the frequency of touching the laundry type displayed on the laundry type displaying region.

The amount of the laundry may be inputted to the information input unit, in proportion to the touch time of the laundry type displayed on the laundry type displaying region.

The control unit may determine that it is inappropriate to perform a washing course when a soft fabric type of laundry and a rough fabric type of laundry are inputted simultaneously.

The control unit may determine that it is inappropriate to perform a washing course when a colored type of laundry and a white type of laundry are inputted simultaneously.

The control panel may further include alarm means to notice the result of the determination to the user when the control unit determines that it is inappropriate to perform the washing course.

In another embodiment of the invention, a laundry machine includes a screen to display information on laundry and at least one piece of washing information; an information input unit to input a plurality of types of laundry; a control unit to determine the at least one piece of the washing information based on information inputted from the information input unit; and an information receiving unit to receive a finish time of a washing course from a user terminal.

A drum may be rotated for a preset time period when the finish time of the washing cycle received from the user terminal is later than an expected finish time of the washing course received from the control unit of the laundry machine.

The drum may be rotated alternatively along clockwise and counter-clockwise directions, when the drum is rotated for the preset time period.

In a further aspect of the invention, a method for controlling a laundry machine includes a step of enabling a user to input a plurality of laundry types; and a step of determining at least one piece of washing information based on the plurality of the inputted laundry types.

### Advantageous Effects of Invention

According to the invention, the plurality of the laundry types may be selected and effective washing may be performed by reflecting information on the plurality of the laundry types.

### Brief Description of Drawings

Arrangements and embodiments may be described in detail with reference to the following drawings in which like reference numerals refer to like elements and wherein:
FIG. 1 is a perspective view illustrating a laundry machine according to an embodiment of the invention;
FIG. 2 is a diagram illustrating a screen according to an embodiment provided in a control panel of the laundry machine;
FIG. 3 is a diagram illustrating a method of selecting a type of laundry from the screen;
FIG. 4 is a diagram illustrating a method of inputting a soil level of the laundry from the screen;
FIG. 5 is a diagram schematically illustrating a structure of a laundry machine according to another embodiment of the invention; and
FIG. 6 is a flow chart illustrating a method of controlling the laundry machine according to an embodiment of the invention.

### Best Mode for Carrying out the Invention

Embodiments of the invention will be described in detail to be embodied by those skilled in the art to which the embodiments pertain to, in reference to the accompanying drawings, as follows.

A laundry machine according to the embodiments of the invention may be a dryer. However, the laundry machine adapted to describe the embodiments of the invention is a washing machine for convenience of explanation.

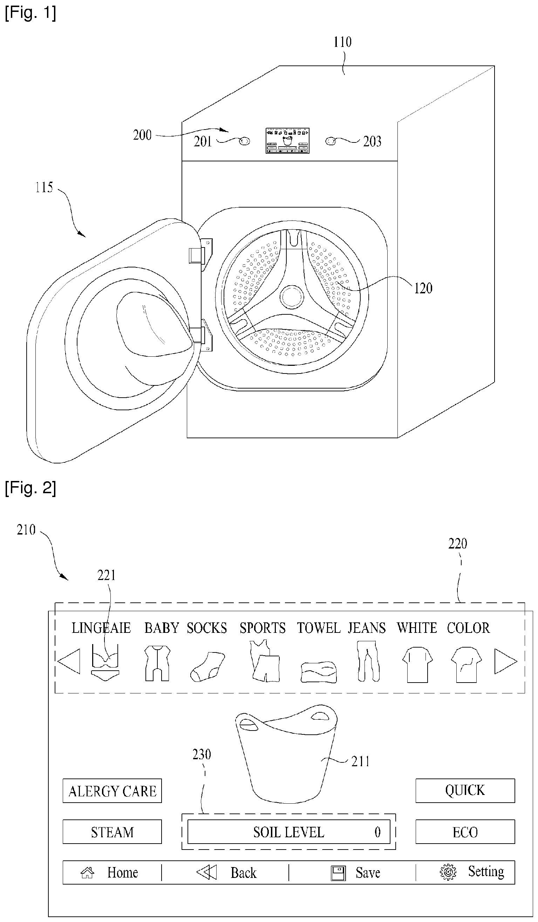

First of all, in reference to FIG. 1, an overall structure of a laundry machine 100 will be described.

The laundry machine 100 according to the embodiment of the invention includes a cabinet 100 configured to define an exterior appearance thereof, with an opening formed in a front surface to load and unload laundry. Also, the laundry machine may further include a tub (not shown) provided in the cabinet 110 to hole wash water and it may further include a drum 120 rotatably provided in the tub. The laundry machine comprises a control unit (not shown) configured to control driving of the laundry machine. In this instance, the tub and the drum are well-known elements provided in the well-known laundry machine and detailed description thereof will be omitted accordingly.

The cabinet 110 forms a predetermined room capable of receiving the tub and the drum. The opening in communication with the inside of the drum is formed in the front surface of the cabinet 110 to enable the laundry loaded and unloaded there through. Also, a door 115 is coupled to the front surface of the cabinet 110 to open and close the opening.

Meanwhile, a control panel 200 is provided on the front surface of the cabinet 110 to enable a user to input a control command of the laundry machine.

The control panel 200 may include a power button 201 to turn on and off the laundry machine. Also, it may include an on/pause button 203 to enable the laundry machine to be on and paused. Together with that, a screen 210 may be provided in the control panel 200 to display information on laundry and at least one piece of washing information and an information input part may be further provided to input a plurality of laundry types.

Terminology which will be used as follows is defined. 'Information on laundry' and 'washing information'that are disclosed in the specification may be distinguished from each other. 'Information on laundry'means information on the laundry itself. In other words,'information on laundry'means a type of the laundry (or the kind of the fabric of the laundry), a color of the laundry, a soil level of the laundry and peculiar information. The type of the laundry includes lingerie, baby clothes, socks, sportswear, towels, jeans and shirts. The color of the laundry is classified into colored and white. The peculiar information means the laundry is for hand-wash/dry or allowable for use of chlorine bleach. 'Washing information'means information for a driving condition of a part required in washing the laundry or a configuration required to wash the laundry. In other words, 'washing information'includes a water level of wash water, the temperature of the wash water, the spinning speed of the drum and the amount of detergent required for washing.

The information input part may be provided on the screen. In other words, the screen may be a touch screen 210 and the information input part may be realized by the touch screen 210. For example, a display image displayed on the touch screen 210 may have a region to input information on the laundry. The information on the laundry, in other words, a type, the amount, a color, a soil level of the laundry may be inputted via the information input part.

A specific embodiment of inputting information on each of the laundry items will be described in reference to the accompanying drawings as follows.

First of all, FIG. 2 is a diagram illustrating an embodiment of a display image on the touch screen 210 including the information input part.

In reference to FIG. 2, the touch screen 210 includes a washing-object-type displaying region 220 to display a type of a laundry. A plurality of icons for displaying types of laundry items may be displayed on the laundry type displaying region 220. According to the embodiment, the types of the laundry items are configured of lingerie, baby clothes (baby), socks, sportswear (sports), towels, jeans, white shirts and colored shirts. The types of the laundry shown in FIG. 2 are one example of the invention and the invention is not limited thereto.

The user may select the types of the laundry displayed on the laundry type displaying region 220.

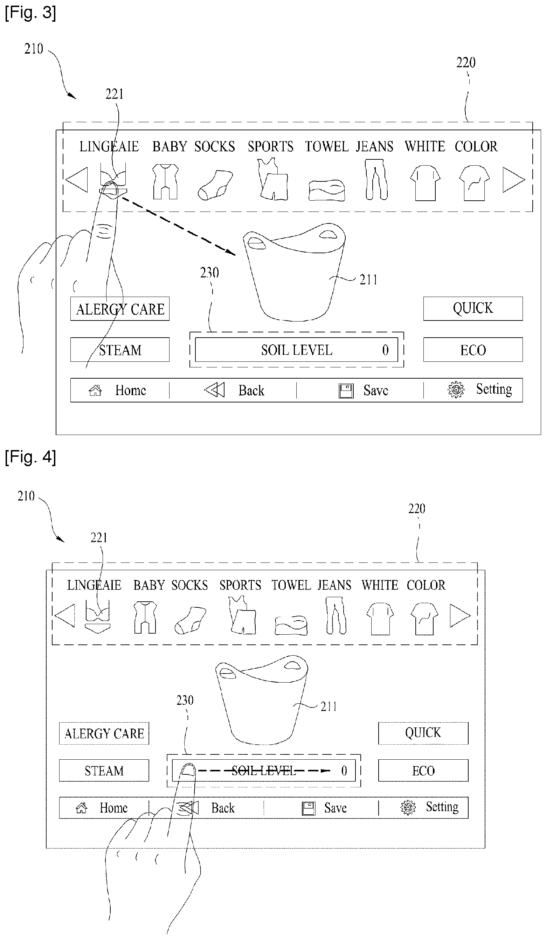

The user touches one of the icons displayed on the laundry type displaying region 220 and drags the icon to a specific position on the touch screen 210, to select the type of the laundry. In other words, as shown in FIG. 3, the user may select a lingerie icon 221 and drag the lingerie icon 221 to a laundry box 211 to select a lingerie laundry type. A plurality of laundry types may be selected in the laundry machine according to the embodiment of the invention. In other words, when lingerie, baby, sports laundry items are washed together, the user may touch and drag the lingerie icon 221 displayed on the laundry type displaying region 220 to a center region 211 of the screen and he or she may select the lingerie laundry type. After that, the user may select baby and sports laundry types according to the same method.

In the embodiment mentioned above, the laundry types include the colored shirts (icon) and white shirts (icon). The color of the laundry may be inputted according to the laundry type. In other words, the touch screen 210 may include a laundry color input region to input a color of the laundry based on the type of the laundry. After a laundry type is selected from the laundry type input region, a color of the corresponding laundry item may be inputted to the laundry color input region. For example, the lingerie icon may be selected and a color (colored or white) of the lingerie laundry item may be inputted. After that, the sports icon may be selected again and a color of the sports laundry item may be inputted.

Meanwhile, according to the embodiment of the invention, the amount of the laundry according to each type of the laundry may be inputted via the touch screen 210. When washing three pairs of jeans, the user may touch a jeans icon displayed on the laundry type displaying region 220 three times to input the amount of the jeans. After that, the user drags the jeans icon to a center region 211 of the touch screen 210 and selects the type of the laundry. In this instance, the frequency of the clicks for the jeans icon may be displayed on the touch screen 210. In the embodiment mentioned above, the amount of the laundry is inputted in proportion to the frequency of the icon touching. However, the amount of the laundry may be inputted in proportion to the time period of the icon touching. Even in this instance, the time of the icon touching may be displayed on the touch screen 210 while the icon is touched.

The touch screen 210 includes a soil level input region 230 to input a soil level of the laundry. The user may input a soil level of the laundry via the soil level input region 230. In reference to FIG. 4, the soil level input region 230 may be provided in a predetermined region on the touch screen 210. The user may touch a first point on the soil level input region 230 and drag the touched first point to a second point, to input a soil level of the laundry. In other words, the touched point on the soil level input region 230 is dragged to another point and the soil level of the laundry. After the selection of the laundry type is completed, the soil level of the entire laundry may be inputted. However, the embodiment of the invention is not limited thereto and a soil level of each laundry item can be inputted. For example, the lingerie is selected and a soil level of the selected lingerie laundry item is inputted. After that, a socks icon may be selected again and a soil level of the socks may be inputted.

In the embodiment mentioned above, the soil level is increased in proportion to the distance from the first point to the second point. However, the soil level may be inputted in proportion to the time period of touching the soil level input region 230. In this instance, the time period of touching the icon may be displayed on the touch screen 210.

Meanwhile, the control unit may determine based on the input laundry information whether it is appropriate to wash the plurality of the input laundry items at the same time. Together with that, when it is inappropriate to wash the laundry items at the same time based on the result of the determination, the laundry machine according to the embodiment of the invention may further include alarm means (not shown) to notice the result of the determination to the user. When determining that it is inappropriate to perform the washing to the input types of the laundry at the same time, the control unit controls a warning message to be popped up on the touch screen 210 or an alarm to be sounded. The alarm means may be the touch screen 210 to displaying the washing message or a speaker capable of making the alarm sound.

The control unit may determine types of laundry items that are inappropriate to perform the washing simultaneously. In other words, the control unit may determine that it is inappropriate to perform washing when a soft fabric type and a rough fabric type of the laundry are inputted. For example, when the user inputs jean and baby types from the laundry type inputting region simultaneously, the control unit may determine that it is inappropriate to simultaneously perform the washing for the types of the laundry. If the soft fabric type of the laundry and the rough fabric type of the laundry are washed simultaneously, either of the types could be washed excessively or insufficiently and the laundry might be unwashed or damaged. To solve the disadvantage, the embodiment of the invention presents the laundry machine that includes the control unit configured to determine whether the inappropriate types of the laundry for performing the simultaneous washing are inputted and to control the alarm means to notice the input of the inappropriate types to the user, when the inappropriate types are inputted.

Also, the control unit may determine inappropriate colors of the laundry for performing the simultaneous washing. In other words, when a colored washing item and a white color washing item are inputted to the control unit simultaneously, the control unit may determine that it is inappropriate to perform the simultaneous washing to the washing items. If the colored laundry item and the white laundry item are washed simultaneously, dyes from the colored washing items might penetrate through the white laundry item and the white laundry item might be discolored. To solve the disadvantage, the embodiment of the invention presents that the control unit of the laundry machine determines whether discoloration of the laundry items is generated when the simultaneous washing is performed and it notices the result of the determination to the user via the alarm means.

When determining that the simultaneous washing is inappropriate, the control unit may controls the alarm means to warn the user and a message requesting whether the washing is continued to be output on the touch screen 210. At this time, the user may stop the washing course or continue the washing, ignoring the warning. When the user stops the washing process, the information on the laundry inputted before may be deleted and the touch screen may return to the screen to input the type of the laundry. When the user continues the washing process, ignoring the warning, the control unit may set the temperature of the wash water to be cold. In other words, the control unit may set the wash water to be cold water to prevent discoloration and damage of the laundry, when it proceeds the washing inevitably.

After that, the control unit may determine washing information based on the information on the input laundry and it may perform the washing for the laundry based on the determined washing information. Together with that, the control unit may display an expected duration time and/or an expected finish time of the washing course on the touch screen 210.

### [MODE FOR INVENTION]

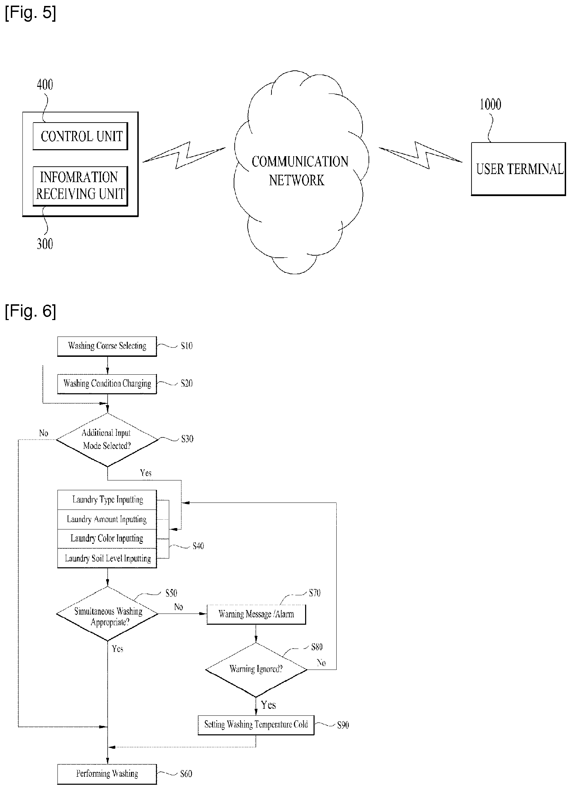

In reference to FIG. 5, a laundry machine according to another embodiment of the invention will be described as follows.

As shown in FIG. 5, the laundry machine according to this embodiment of the invention may further include an information receiving unit 300 to receive a finish time of a washing course from a terminal 1000 possessed by the user.

The user terminal 1000 may be a well-known terminal enabling wired and wireless communication such as a smart phone, PDA and PC. The information receiving unit 300 may receive the finish time of the washing course from the user terminal 1000. When the user goes out, with operating the laundry machine, the user might return home for quite a while after the finish time of the washing course. In this instance, the washing course finished and the washed laundry will be left in the drum. In hot humid summer, the laundry might be corrupted enough to smell bad. According to the embodiment of the invention, when the user returns home later than the expected finish time of the washing course after going out, with operating the laundry machine, the finish time of the washing course may be changed according to the embodiment of the invention and the corruption of the laundry in the drum may be prevented after the washing source finishes.

The user terminal 1000 is connected with the information receiving unit 300 via a wired or wireless communication network. The information receiving unit 300 may receive the changed finish time of the washing course from the user terminal 1000. The information receiving unit 300 may receive the changed finish time of the washing course and the control unit 400 may slow down the speed of the washing source according to the received finish time. Accordingly, the washing course may finish, fitted to the changed finish time. In an embodiment, when the finish time received from the user terminal 1000 is slower than the originally set finish time, the control unit 400 may rotate the drum for a preset time period. The corruption speed of the laundry may slow down by rotating the drum. Especially, when the changed finish time of the washing course is received from the user terminal 1000 before a rinsing cycle is completed, the wash water may not be drained after the rinsing cycle and the drum may be rotated for a preset time period, to finish the washing course, fitted to the changed finish time. In this instance, the drum may be rotated along a clockwise and counter-clockwise direction to prevent laundry entanglement.

Meanwhile, in the embodiment mentioned above, the information input part is provided on the touch screen 210. However, the embodiment of the invention is not limited thereto and the information input part may be a button provided adjacent to the touch screen. In other words, buttons corresponding to information on the laundry may be provided. For example, as buttons for inputting the types of the laundry there may be provided buttons corresponding to lingerie, baby clothes and socks, respectively.

In reference to FIGS. 2 to 6, a method for controlling the laundry machine described above will be described as follows.

A method according to an embodiment of the invention for controlling the laundry machine may include a source selecting step (S10) of enabling a user to select one of washing courses. Also, the method may include an inputting step (S40) of enabling the user to input a plurality of laundry types and a step of inputting at least one or more of the amount, color and soil level of the laundry. In addition, the method may include a determining step (S50) of determining whether it is appropriate to perform the washing course according to the input type or color of the laundry and a noticing step (S70) of noticing the result of the determination to the user, when it is inappropriate to perform the washing course. Also, the method may further include a step (S80) of requesting the user whether to continue the washing course and a step of displaying an expected finish time of the washing course and/or an expected duration time of the washing course. In addition, the method may include a step of receiving an input finish time of the washing course from the user. When the input finish time received from the user terminal is later than the expected finish time, there may be further provided a step of rotating the drum for a preset time period.

First of all, the user presses the power button 210 to turn on the power of the laundry machine. In this instance, the plurality of the washing courses which are selectable by the user may be displayed on the touch screen 210 and the user may select one of the washing courses (S10). The washing courses displayed on the screen may include a standard source, a strong source, a quick course, a lingerie/wool course and the like. In each of the washing courses may be set the washing information (namely, the washing conditions) set by a manufacturer based on the user's environment or the laundry type. For example, the standard course may be used for normal washing and the lingerie/ wool course may be used for transformable or easily damageable fabric such as lingerie. The user may select one of the washing courses displayed on the screen.

After selecting the washing course, the user may change the washing information according to each of the washing courses (S20). In other words, the user may change one or more piece of the washing information preset according to each of the washing courses. For example, 40 degrees of the temperature of wash water, two rinsing cycles, and 800rpm of the spinning speed are set in the standard course as the washing information. In this instance, the user may change the two rinsing cycles into three rinsing cycles. If the user does not wish to change the washing information set in the washing course, this step may be skipped.

Once the washing course selecting and the washing information changing are completed, another screen is displayed on the touch screen 210 to enable the user to select an additional input mode (S30). When the user selects the additional input mode, the user may input laundry information. In other words, when the user selects the additional input mode, the screen is switched to input at least one or more of the type, amount, color and soil level of the laundry (S40). In this instance, the touch screen 210 may display a screen having the laundry type displaying region 220. The plurality of the icons indicating the types of the laundry may be displayed on the laundry type displaying region 220. According to the embodiment, the types of the laundry may be composed of lingerie, baby clothes (BABY, see FIG. 2), socks (SOCK, see FIG. 2), sportswear (SPORTS, see FIG. 2), towels (TOWEL, see FIG. 2), jeans (JEANS, see FIG. 2), white shirts (WHITE, see FIG. 2) and colored shirts (COLOR, see FIG. 2).

The user may select the types of the laundry displayed on the laundry type displaying region 220.

In reference to FIG. 3, the user may touch one of the icons displayed on the laundry type displaying region 220 and drag the touched icon to a specific point on the touch screen 210 to select the type of the laundry. In other words, as shown in FIG. 3, the user selects the lingerie icon 210 and drags it to the laundry body 211 displayed at a center of the screen to select the lingerie type. According to the embodiment of the invention, the plurality of the laundry types may be selected in the laundry machine. In other words, when selecting the lingerie, the baby clothes and the sportswear together, the user may touch the lingerie icon displayed on the laundry type displaying region 220 and drags it to the center of the screen to select the lingerie type. After that, the user may select the baby clothes and the sportswear according to the same method.

Also, FIG. 2 shows that there are the colored shirts and white shirts as the laundry type. However, the color of the laundry may be inputted according to each type of the laundry. In other words, the touch screen 210 may include the laundry color inputting region to input the color of the laundry according to each type of the laundry. After selecting the type of the laundry from the laundry type inputting region, the user may input the color of the corresponding laundry from the laundry color inputting region. For example, the user selects the lingerie icon and inputs the color (colored or white) of the lingerie. After that, the user selects the sportswear icon again and inputs the color of the sportswear type laundry.

Also, the user may input the amount of the laundry according to each type of the laundry on the touch screen 210. When washing three pairs of jeans, the user may touch the jeans icon displayed on the laundry type displaying region 220 three times to input the amount of the jeans. After that, the user drags the jeans icon to a center point of the touch screen 210 to select the type of the laundry. In this instance, the frequency of clicking the jeans icon may be also displayed on the touch screen 210. In the embodiment described above, the amount of the laundry may be input in proportion to the frequency of touching the icon. However, the amount of the laundry may be input in proportion to the time of touching the icon. Even in this instance, the duration time of touching the icon may be displayed on the touch screen 210 while the icon is touched.

Together with that, the user may input the soil level of the laundry. The touch screen 210 includes the soil level inputting region 230 to input the soil level of the laundry. The user may input the soil level of the laundry via the soil level inputting region 230. In reference to FIG. 4, the soil level inputting region 230 may be provided in a predetermined area on the touch screen 210. The user may touch a first point on the soil level inputting region 230 and drag the touched point to a second point to input the soil level of the laundry. In other words, a predetermined point of the soil level inputting region 230 may be touched and dragged to another point such that the soil level of the laundry may be inputted. The soil level of the laundry may be in proportion to the distance from the first point to the second point. The soil level of the laundry may be a soil level of the entire laundry after the type of the laundry is selected. However, the embodiment is not limited thereto and it is possible to input a soil level of each laundry type. For example, the lingerie icon is selected and a soil level of the lingerie is inputted. After that, the socks icon is selected again and a soil level of the socks is inputted.

FIG. 4 shows that the soil level is increased in proportion to the distance from the first point to the second point. However, the soil level of the laundry may be inputted in proportion to the touch time of the soil level inputting region 230. In this instance, the touch time of the icon may be also displayed on the touch screen 210.

The control unit may determine whether it is appropriate to simultaneously wash the plurality of the inputted laundry items based on the inputted laundry information (S50). When determining that the simultaneous washing for the inputted laundry types is inappropriate, the control unit may pop up a warning message on the touch screen 210 or make an alarm to warn the user (s70).

The control unit may determine the types of the laundry which are inappropriate to wash simultaneously (S50). In other words, the control unit may determine that it is inappropriate to perform the washing course for the inputted types, when a soft fabric type of laundry and a rough fabric type of laundry are inputted simultaneously. For example, when the user inputs the jeans type and baby clothes type from the laundry type inputting region simultaneously, it may be determined that the performing of the washing course for them is inappropriate.

Also, the control unit may determine the color of the laundry which is inappropriate to simultaneously perform a wash course for (S50). In other words, when a colored laundry item and a white laundry item are inputted simultaneously, the control unit may determine that the washing course is inappropriate to perform for the items.

When determining that it is inappropriate to perform the washing course, the control unit may warn the user via the alarm means (S70) and it may output a message requesting whether to continue the washing course on the touch screen 210 (S80). In this instance, the user may stop washing course or proceeding the washing course, with ignoring the warning. When the user stops the washing course, the information on the inputted laundry may be deleted and the screen may be switched into a screen for inputting a type of laundry again. When the user precedes the washing course, with ignoring the warning, the control unit may set the temperature of wash water to be a cold temperature (S90). In other words, the control unit may set the temperature of the wash water to be the cold temperature to prevent discoloration and damage of the laundry, when the washing course has to be continued inevitably.

After that, the control unit may determine washing information based on the input information on the input laundry and it may perform washing based on the determined washing information (S60). More specifically, the washing information inputted according to the washing course selected by the user primarily may be changed and washing may be performed based on the changed washing information. Also, the control unit may display an expected duration time and/or expected finish time of the washing course on the touch screen 210.

Meanwhile, in reference to FIG. 5, the information receiving unit 300 of the laundry machine may receive the finish time of the washing course from the user terminal 1000. In other words, the user may change the finish time of the washing course by using the user terminal 1000. The information receiving unit 300 may receive the changed finish time of the washing course from the user terminal 1000 via a communication network. The information receiving unit 300 may receive the finish time of the washing course and the control unit 400 may slow down the changed finish time received from the user terminal 1000 according to the received finish time. As a result, the washing course may finish, fitted to the changed finish time. When the finish time received from the user terminal 1000 is later than the originally expected finish time, the control unit may control the drum to be rotating for a preset time period. Especially, when the changed finish time of the washing course is received from the user terminal 1000 before a rinsing cycle of the washing course is completed, the drum may be rotated for the preset time period, without draining the wash water after the rinsing cycle. Accordingly, the washing course may finish, fitted to the changed finish time. In this instance, the drum may be rotated alternatively along clockwise and counter-clockwise directions to prevent laundry entanglement.

Although embodiments have been described with reference to a number of illustrative embodiments thereof, it should be understood that numerous other modifications and embodiments can be devised by those skilled in the art that will fall within the the scope of the appended claims.

## Claims

1. A control panel (200) for a laundry machine (100) comprising the control panel (200), said control panel (200) comprising:
a screen (210) to display information on laundry and at least one input value of washing information;
an information input unit to input a plurality of types of laundry by a user; and
a control unit (400) to determine the at least one input value of the washing information based on information inputted to said input unit,
wherein at least one of the amount of the laundry, a color of the laundry and a soil level of the laundry is additionally inputted to said information input unit,
wherein the control unit (400) is configured to determine if it is inappropriate to perform a washing course according to the inputted type of the laundry or the inputted color of the laundry.

2. The control panel (200) according to claim 1, wherein the information input unit comprises a laundry type displaying region to display the plurality of the types of the laundry.

3. The control panel (200) according to claim 1, wherein the information input unit is provided on the screen (210).

4. The control panel (200) according to claim 3,
wherein the information input unit comprises a soil level inputting region to input a soil level of the laundry, and
wherein the soil level of the laundry is inputted by touching a first point on the soil level inputting region and dragging the touched point to a second point.

5. The control panel (200) according to claim 1, wherein the control unit is configured to determine that it is inappropriate to perform a washing course when a colored type of laundry and a white type of laundry are inputted simultaneously.

6. The control panel (200) according to claim 5, further comprising:
alarm means to notice the result of the determination to the user when the control unit determines that it is inappropriate to perform the washing course.

7. The control panel (200) according to claim 1, further comprising:
an information receiving unit (300) to receive a finish time of a washing course from a user terminal (1000).

8. The control panel (200) according to claim 7, wherein a drum (120) is configured to be rotated for a preset time period when the finish time of the washing cycle received from the user terminal (1000) is later than an expected finish time of the washing course received from the control unit (400) of the laundry machine (100).

9. The control panel (200) according to claim 8, wherein the drum (120) is configured to be rotated alternatively along clockwise and counter-clockwise directions, when the drum (120) is rotated for the preset time period.

10. A method for controlling a laundry machine (100) using a control panel (200) according to claim 1 comprising:
enabling a user to input a plurality of types of laundry;
enabling the user to additionally input at least one of the amount of the laundry, a color of the laundry and a soil level of the laundry;
determining at least one input value of washing information based on the plurality of the inputted laundry types; and
determining if it is inappropriate to perform a washing course according to the inputted type of the laundry or the inputted color of the laundry.

11. The method according to claim 10, further comprising:
an initial course selecting to enable the user to select one of washing courses,
wherein washing information of the course selected by the user is changed based on the plurality of the inputted laundry types.

12. The method according to claim 10, further comprising:
determining whether it is appropriate to perform a washing course according to the inputted type of the laundry or the inputted color of the laundry; and
noticing the result of the determination to the user when it is determined that the performing of the washing course is inappropriate.

13. The method according to claim 10, further comprising:
displaying an expected finish time and/or expected duration time of the washing course; and
receiving a finish time of the washing course from a user terminal.

14. The method according to claim 13, further comprising:
rotating a drum for a preset time period when the finish time received from the user terminal is later than the expected finish time.

15. The method according to claim 14, wherein the drum is rotated alternatively along clockwise and counter-clockwise directions.

16. The method according to claim 12, further comprising:
outputting a message requesting whether to continue the washing course.

17. The method according to claim 12, further comprising:
ignoring the noticing, setting the temperature of a wash water to be cold, when the user continues the washing process.

## Patentansprüche

1. Bedienfeld (200) für eine Waschmaschine (100), die das Bedienfeld (200) aufweist, wobei das Bedienfeld (200) aufweist:
einen Bildschirm (210), um Informationen über Wäsche und mindestens einen Eingabewert von Waschinformationen anzuzeigen;
eine Informationseingabeeinheit, um mehrere Wäschearten durch einen Benutzer einzugeben; und
eine Steuereinheit (400), um den mindestens einen Eingabewert der Waschinformationen beruhend auf Informationen zu bestimmen, die in die Eingabeeinheit eingegeben werden,
wobei zusätzlich die Menge der Wäsche und/oder eine Farbe der Wäsche und/oder ein Verschmutzungsgrad der Wäsche in die Informationseingabeeinheit eingegeben werden,
wobei die Steuereinheit (400) konfiguriert ist, gemäß der eingegebenen Wäscheart oder der eingegebenen Farbe der Wäsche festzustellen, ob es ungeeignet ist, einen Waschgang durchzuführen.

2. Bedienfeld (200) nach Anspruch 1, wobei die Informationseingabeeinheit einen Wäscheartanzeigebereich aufweist, um die mehreren Arten der Wäsche anzuzeigen.

3. Bedienfeld (200) nach Anspruch 1, wobei die Informationseingabeeinheit auf dem Bildschirm (210) vorgesehen ist.

4. Bedienfeld (200) nach Anspruch 3, wobei die Informationseingabeeinheit einen Verschmutzungspegel-Eingabebereich aufweist, um einen Verschmutzungsgrad der Wäsche einzugeben, und wobei der Verschmutzungsgrad der Wäsche durch Berühren eines ersten Punkts auf dem Verschmutzungspegel-Eingabebereich und Ziehen des berührten Punkts zu einem zweiten Punkt eingegeben wird.

5. Bedienfeld (200) nach Anspruch 1, wobei die Steuereinheit konfiguriert ist, festzustellen, dass es ungeeignet ist, einen Waschgang durchzuführen, wenn eine farbige Wäscheart und eine weiße Wäscheart gleichzeitig eingegeben werden.

6. Bedienfeld (200) nach Anspruch 5, das ferner aufweist:
Alarmmittel, um das Ergebnis der Feststellung dem Benutzer mitzuteilen, wenn die Steuereinheit feststellt, dass es ungeeignet ist, den Waschgang durchzuführen.

7. Bedienfeld (200) nach Anspruch 1, das ferner aufweist:
eine Informationsempfangseinheit (300), um eine Endzeit eines Waschgangs von einem Benutzerendgerät (1000) zu empfangen.

8. Bedienfeld (200) nach Anspruch 7, wobei eine Trommel (120) konfiguriert ist, für eine voreingestellte Zeitspanne gedreht zu werden, wenn die vom Benutzerendgerät (1000) empfangene Endzeit des Waschzyklus später als eine von der Steuereinheit (400) der Waschmaschine (100) empfangene erwartete Endzeit des Waschgangs ist.

9. Bedienfeld (200) nach Anspruch 8, wobei die Trommel (120) konfiguriert ist, abwechselnd längs der Richtung im Uhrzeigersinn und längs der Richtung gegen den Uhrzeigersinn gedreht zu werden, wenn die Trommel (120) für eine voreingestellte Zeitspanne gedreht wird.

10. Verfahren zum Steuern einer Waschmaschine (100), die ein Bedienfeld (200) nach Anspruch 1 verwendet, das aufweist:
Ermöglichen, dass ein Benutzer mehrere Wäschearten eingibt;
Ermöglichen, dass der Benutzer zusätzlich die Menge der Wäsche und/oder eine Farbe der Wäsche und/oder einen Verschmutzungsgrad der Wäsche eingibt;
Bestimmen mindestens eines Eingabewerts von Waschinformationen beruhend auf den eingegebenen Wäschearten; und
Feststellen, ob es ungeeignet ist, einen Waschgang durchzuführen, gemäß der eingegebenen Art der Wäsche oder der eingegebenen Farbe der Wäsche.

11. Verfahren nach Anspruch 10, das ferner aufweist:
eine Auswahl eines anfänglichen Waschgangs, um es einem Benutzer zu ermöglichen,
einen der Waschgänge auszuwählen, wobei die Waschinformationen des durch den Benutzer ausgewählten Waschgangs beruhend auf den mehreren eingegebenen Wäschearten geändert werden.

12. Verfahren nach Anspruch 10, das ferner aufweist:
Feststellen, ob es geeignet ist, einen Waschgang durchzuführen, gemäß der eingegebenen Art der Wäsche oder der eingegebenen Farbe der Wäsche; und
Mitteilen des Ergebnisses der Feststellung dem Benutzer, wenn festgestellt wird, dass das Durchführen des Waschgangs ungeeignet ist.

13. Verfahren nach Anspruch 10, das ferner aufweist:
Anzeigen einer erwarteten Endzeit und/oder erwarteten Dauer des Waschgangs; und
Empfangen einer Endzeit des Waschgangs von einem Benutzerendgerät.

14. Verfahren nach Anspruch 13, das ferner aufweist:
Drehen einer Trommel für eine voreingestellte Zeitspanne, wenn die vom Benutzerendgerät empfangene Endzeit später als die erwartete Endzeit ist.

15. Verfahren nach Anspruch 14, wobei die Trommel abwechselnd längs der Richtung im Uhrzeigersinn und längs der Richtung gegen den Uhrzeigersinn gedreht wird.

16. Verfahren nach Anspruch 12, das ferner aufweist:
Ausgeben einer Nachricht, die anfragt, ob der Waschgang fortgesetzt werden soll.

17. Verfahren nach Anspruch 12, das ferner aufweist:
Ignorieren der Benachrichtigung, Setzen der Temperatur des Waschwassers auf kalt, wenn der Benutzer den Waschvorgang fortsetzt.

## Revendications

1. Tableau de commande (200) pour un lave-linge (100) présentant un tableau de commande (200), ledit panneau de commande (200) comprenant :
un écran (210) destiné à afficher des informations sur le linge et au moins une valeur d'entrée d'informations de lavage ;
une unité d'entrée d'informations destinée à la saisie d'une pluralité de types de linge par un utilisateur ; et
une unité de commande (400) destinée à déterminer ladite au moins une valeur d'entrée des informations de lavage sur la base d'informations saisies sur ladite unité d'entrée,
où la quantité de linge et/ou la couleur du linge et/ou un degré de saleté du linge sont saisis additionnellement sur l'unité d'entrée d'informations,
où l'unité de commande (400) est prévue pour déterminer s'il est inapproprié de lancer un cycle de lavage en fonction du type de linge entré ou de la couleur de linge entrée.

2. Tableau de commande (200) selon la revendication 1, où l'unité d'entrée d'informations comprend une zone d'affichage de types de linge destinée à afficher la pluralité de types de linge.

3. Tableau de commande (200) selon la revendication 1, où l'unité d'entrée d'informations est présente sur l'écran (210).

4. Tableau de commande (200) selon la revendication 3,
où l'unité d'entrée d'informations comprend une zone de saisie du degré de saleté destinée à l'entrée d'un degré de saleté du linge, et
où le degré de saleté du linge est entré en touchant un premier point sur la zone de saisie du degré de saleté et déplacement du point touché vers un deuxième point.

5. Tableau de commande (200) selon la revendication 1, où l'unité de commande est prévue pour déterminer qu'il est inapproprié de lancer un cycle de lavage si un type de linge de couleur et un type de linge blanc sont entrés simultanément.

6. Tableau de commande (200) selon la revendication 5, comprenant en outre :
une unité d'alarme destinée à notifier le résultat de la détermination à l'utilisateur si l'unité de commande détermine qu'il est inapproprié de lancer un cycle de lavage.

7. Tableau de commande (200) selon la revendication 1, comprenant en outre :
une unité de réception d'informations (300) destinée à recevoir un temps de fin d'un cycle de lavage d'un utilisateur terminal (1000).

8. Tableau de commande (200) selon la revendication 7, où un tambour (120) est prévu pour être entraîné en rotation pendant une durée définie si le temps de fin du cycle de lavage reçu de l'utilisateur terminal (1000) est plus tardif qu'un temps de fin attendu du cycle de lavage reçu de l'unité de commande (400) du lave-linge (100).

9. Tableau de commande (200) selon la revendication 8, où le tambour (120) est prévu pour être entraîné en rotation en alternance dans le sens des aiguilles d'une montre et le sens inverse des aiguilles d'une montre, si le tambour (120) est entraîné en rotation pendant la durée définie.

10. Procédé de commande d'un lave-linge (100) au moyen d'un tableau de commande (200) selon la revendication 1, comprenant :
la possibilité accordée à un utilisateur d'entrer une pluralité de types de linge ;
la possibilité accordée à l'utilisateur de saisir additionnellement la quantité de linge et/ou la couleur du linge et/ou un degré de saleté du linge ;
la détermination d'au moins une valeur d'entrée d'informations de lavage sur la base de la pluralité de types de linge saisis ; et
la détermination s'il est inapproprié de lancer un cycle de lavage en fonction du type de linge entré ou de la couleur de linge entrée.

11. Procédé selon la revendication 10, comprenant en outre :
une sélection de cycle initial permettant à l'utilisateur de sélectionner un des cycles de lavage,
les informations de lavage du cycle sélectionné par l'utilisateur étant modifiées sur la base de la pluralité de types de linge entrés.

12. Procédé selon la revendication 10, comprenant en outre :
la détermination s'il est approprié de lancer un cycle de lavage en fonction du type de linge entré ou de la couleur de linge entrée ; et
la notification à l'utilisateur du résultat de la détermination s'il est déterminé qu'il est inapproprié de lancer le cycle de lavage.

13. Procédé selon la revendication 10, comprenant en outre :
l'affichage d'un temps de fin attendu et/ou d'une durée attendue du cycle de lavage ; et
la réception d'un temps de fin du cycle de lavage d'un utilisateur terminal.

14. Procédé selon la revendication 13, comprenant en outre :
l'entraînement en rotation du tambour pendant une durée définie si le temps de fin reçu de l'utilisateur terminal est plus tardif que le temps de fin attendu.

15. Procédé selon la revendication 14, où le tambour est entraîné en rotation en alternance dans le sens des aiguilles d'une montre et le sens inverse des aiguilles d'une montre.

16. Procédé selon la revendication 12, comprenant en outre :
l'émission d'un message de demande s'il convient de poursuivre le cycle de lavage.

17. Procédé selon la revendication 12, comprenant en outre :
la non-prise en compte de la notification, le réglage à froid de la température de l'eau de lavage si l'utilisateur poursuit le processus de lavage.
